# EUROPÄISCHE PATENTANMELDUNG

(11) **EP 0 967 252 A1**
(43) Veröffentlichungstag der Anmeldung: **29.12.1999**
(21) Anmeldenummer: 99111304.4
(22) Anmeldetag: 10.06.1999
(51) Int. Cl.: C09C 1/30, B01D 19/04, D21H 17/68, D21H 19/40

(54) **Hydrophobe Fällungskieselsäure**

(30) Priorität: 25.06.1998 DE 19828364
(71) Anmelder: Degussa-Hüls Aktiengesellschaft, 60287 Frankfurt am Main (DE)
(72) Erfinder: Schubert, Jürgen Dr., 63584 Gründau (DE); Lortz, Wolfgang Dr., 63607 Wächtersbach (DE)

(57) **Zusammenfassung**

Hydrophobe Fällungskieselsäure mit den physikalischchemischen Kenndaten:

| | | | |
|---|---|---|---|
| Trocknungsverlust | [%] | 2,0 - 10 | DIN ISO 787/2 |
| Glühverlust | [%] | 2 - 25 | DIN ISO 3262/11 |
| Methanolbenetzbarkeit | [%] | 20 - 80 | titriert |
| Kohlenstoffgehalt | [%] | 1 - 30 | - |

wird hergestellt, indem man eine Fällungskieselsäuresuspension mit einer Silanemulsion vermischt und trocknet.

Die hydrophobe Fällungskieselsäure kann zur Herstellung von Entschäumern und bei der Herstellung von Papier eingesetzt werden.

## Beschreibung

Die Erfindung betrifft eine hydrophobe Fällungskieselsäure, ein Verfahren zu ihrer Herstellung und ihre Verwendung.

Es ist bekannt, Fällungskieselsäuren zu hydrophobieren, wobei die verschiedensten Hydrophobierungsmittel eingesetzt werden können (US-A 3,567,680, DE-AS 24 35 860, GB-A 2 001 303, DE-PS 15 67 449, DE-AS 11 72 245, DE-B 25 13 608, DE-B 10 74 559, DE-B 12 29 504, EP-A 0 658 523).

Die bekannten Verfahren haben den Nachteil, daß zum Teil mehrere Stufen, in denen die hydrophile Fällungskieselsäure zunächst getrocknet und erst in einem anschließenden Temperschritt mit dem Silan zur Reaktion gebracht wird, eingehalten werden müssen oder sehr lange Reaktionszeiten trotz hoher Temperaturen benötigt werden.

weiterhin muß, um eine gleichmäßige Hydrophobierung der Fällungskieselsäure erreichen zu können, die Fällungskieselsäure homogen mit dem Silan vermischt werden. Eine homogene Vermischung ist jedoch nicht möglich, wenn eine wäßrige Fällungskieselsäuresuspension eingesetzt wird, weil eine homogene Verteilung des Silans aufgrund seiner hydrophoben Eigenschaften nicht möglich ist.

Es bestand somit die Aufgabe, eine hydrophobe Fällungskieselsäure, die die Nachteile nicht aufweist, herzustellen.

Gegenstand der Erfindung ist eine hydrophobe Fällungskieselsäure, die durch die folgenden physikalischchemischen Kenndaten gekennzeichnet ist:

| | | | |
|---|---|---|---|
| Trocknungsverlust | [%] | 2,0 - 10 | DIN ISO 787/2 |
| Glühverlust | [%] | 2 - 25 | DIN ISO 3262/11 |
| Methanolbenetzbarkeit | [%] | 20 - 80 | titriert |
| Kohlenstoffgehalt | [%] | 1 - 30 | - |

Ein weiterer Gegenstand der Erfindung ist ein Verfahren zur Herstellung der hydrophoben Fällungskieselsäure, welches dadurch gekennzeichnet ist, daß man eine wäßrige Fällungskieselsäuresuspension herstellt und diese mit einer wäßrigen Silanemulsion vermischt und diese Mischung trocknet.

Die Herstellung der Mischung kann batchweise erfolgen. In einer weiteren Ausführungsform der Erfindung kann man die Fällungskieselsäuresuspension und die Silanemulsion nach dem Durchlaufen einer Mischstrecke gleichzeitig in den Sprühtrockner eindosieren.

In einer bevorzugten Ausführungsform der Erfindung kann man die Mischung mittels eines Sprühtrockners trocknen.

Eine andere Möglichkeit für die Durchführung der Mischung und der Trocknung ist das Trocknen mittels eines Spinflash-Trockners.

Als Fällungskieselsäure können alle bekannten Fällungskieselsäuren eingesetzt werden. Derartige Fällungskieselsäuren und ihre Herstellung werden beispielsweise beschrieben in Winnacker-Küchler, Chemische Technologie, Band 3, 4. Auflage, Seite 82 (1983) sowie in Ullmanns Encyklopädie der technischen Chemie, Band 21, 4. Auflage (1982), Seiten 465 ff.

In einer bevorzugten Ausführungsform kann als Fällungskieselsäure VN3 eingesetzt werden. VN3 ist bekannt aus dem o. a. Ullmann, Seite 467, Tabelle 12. Die Fällungskieselsäure VN3 sowie weitere erfindungsgemäß einsetzbare Fällungskieselsäuren sind bekannt aus der Publikation 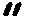 Fällungskieselsäuren und Silikate, Herstellung, Eigenschaften und Anwendung", Degussa Aktiengesellschaft, September 1983.

Als wäßrige Emulsionen von Silanen können Emulsionen, die aus dem Dokument EP-B 0 538 555 bekannt sind, sowie Mischungen unterschiedlicher Silanemulsionen eingesetzt werden.

Derartige aus dem Dokument EP-B 0 538 555 bekannte Emulsionen sind wäßrige, Organosiliciumverbindungen enthaltende Emulsionen, die gegebenenfalls anionische und/oder nichtionische Tenside und den pH-Wert puffernde Substanzen enthalten. Sie enthalten

1 bis 80 Gew.-%, insbesondere von 1 bis 60 Gew.-%, bezogen auf die Gesamtmenge, mindestens eines Alkoxysilans der allgemeinen Formel 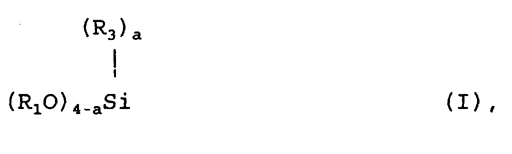 in der bedeuten
- R₁:: C₁-C₃-Alkyl
- R₃:: C₁-C₂₀-Alkyl, geradekettig oder verzweigt, insbesondere C₈-C₁₆-Alkyl, Phenyl
- a:: 0 bis 3

1 bis 20 Gew.-%, vorzugsweise 1 bis 5 Gew.-% eines die Emulsion stabilisierenden Tensides, vorzugsweise eine Organosiliciumverbindung mit tensidartigen Eigenschaften und Wasser in einer Menge von 1 - 95 Gew.-%, bevorzugt 1 - 75 Gew.-%, enthält, wobei sich die Gewichtsmenge auf 100 % ergänzen.

Die Emulsionen können neben den Verbindungen gemäß Formel (I) auch deren Ankondensationsprodukte enthalten, zum Beispiel Dimere, Trimere oder andere Oligomere, wie sie dem Fachmann allgemein bekannt sind. Der pH-Wert der Emulsion wird vorzugsweise auf etwa 7,5 eingestellt.

In einer besonderen Ausführungsform kann man der Emulsion eine Puffersubstanz in einer Menge von 0,1 bis 5 Gew.-%, bezogen auf die Gesamtmenge der Emulsion, zusetzen. Dabei handelt es sich beispielsweise um Natriumhydrogencarbonat, Natriumcarbonat oder Trinatriumphosphat.

In einer weiterhin bevorzugten Ausführungsform setzt man der Emulsion auch 0,2 bis 8,0 Gew.-%, bezogen auf das Gesamtgewicht der Emulsion, eines oder mehrere der bekannten anionischen Tenside zu. Gegebenenfalls enthält die Emulsion auch 0,1 bis 1,0 Gew.-% eines bekannten Verdickers, zum Beispiel aus der Klasse der Cellulose- oder Stärkederivate, ebenfalls bezogen auf die Gesamtmenge der Emulsion. Gegebenenfalls kann die Emulsion 0,2 bis 5,0 Gew.-% anionische und/oder nichtionische Tenside, vorzugsweise Organosiliciumverbindungen mit Tensidcharakter, wie in der EP-B 0 538 555 beschrieben, enthalten.

Bevorzugt werden für die Herstellung der Emulsionen die Silane

(Si 208) C₈H₁₇-Si(OEt)₃

oder

(Si 216) C₁₆H₃₃-Si(OEt)₃

verwendet.

Das erfindungsgemäße Verfahren weist die folgenden Vorteile auf:

Das erfindungsgemäße Verfahren kann an ein bekanntes Verfahren zur Herstellung einer hydrophilen Kieselsäure direkt angeschlossen werden. Der Trocknungsschritt in dem Sprühtrockner kann gleichzeitig als der Schritt zur Umsetzung der Kieselsäure mit dem Silan genutzt werden. Durch die gemeinsame Versprühung der Kieselsäuresuspension und der Silanemulsion wird eine homogene Belegung der Kieselsäureteilchen und damit eine enge Verteilung des Hydrophobierungsgrades erreicht. Durch die sehr kurze Reaktionszeit im Sprühtrockner kann die thermische Belastung des Silans sehr gering gehalten werden.

Die erfindungsgemäße Fällungskieselsäure kann zur Herstellung von Entschäumern und bei der Herstellung von Papier eingesetzt werden.

### Beispiele

### Umsetzung von Organosilanen mit der Fällungskieselsäure Sipernat 22

Für die Oberflächenmodifikation der Kieselsäure werden wäßrige Emulsionen der Organosilane Si 208 und Si 216 verwendet. Bei Si 208 handelt es sich um Triethoxy-octyl-silan und bei Si 216 um Triethoxy-hexadecyl-silan. Die wäßrigen Standardemulsionen dieser Silane werden als WS 405 für Si 208 und als WS 431 für Si 216 bezeichnet. Die Tröpfchengröße der Silane in der wäßrigen Emulsion liegt bei ca. 0,5 µm.

| Silan | Summenformel | wäßrige Emulsion | Silan-Gehalt |
|---|---|---|---|
| Si 208 | (EtO₃)Si(CH₂)₇CH₃ | WS 405 | 500 g/l |
| Si 216 | (EtO₃)Si(CH₂)₁₅CH₃ | WS 431 | 500 g/l |

Für die Umsetzung mit Silanen durch Sprühtrocknung wurde eine Suspension von Sipernat 22 verwendet.
- Feststoffgehalt:: 20,4 Gew.-%
- Oberfläche:: 194 m²/g
- SiOH-Konz.:: 1,08 mmol/g
- Teilchengröße d₅₀:: 28,09 µm

Für die Umsetzung des Silans mit der Fällungskieselsäure Sipernat 22 ist die Zahl der Si-OH-Gruppen an der Oberfläche der Kieselsäure entscheidend. Daher werden die stöchiometrischen Verhältnisse der angestrebten Umsetzung von Silanen mit gefällter Kieselsäure auf 1 mol Si-OH der Kieselsäure bezogen, auch wenn aufgrund möglicher Polykondensation der Silane untereinander diese Stöchiometrie nicht unbedingt der tatsächlichen Reaktion entsprechen muß.

Die Suspension der Fällungskieselsäure Sipernat 22 wird vor der Sprühtrocknung mit einer wäßrigen Emulsion des Silans batchweise so versetzt, daß sich die in nachfolgender Tabelle angegebenen Verhältnisse von Silan zu Si-OH ergeben. Sofort anschließend wird die Mischung sprühgetrocknet. Das Vermischen kann auch kontinuierlich nach dem Durchlaufen einer Mischstrecke in einem Static Mix erfolgen. Beide Komponenten werden dabei gleichzeitig in den Sprühtrockner eindosiert.

### Ergebnisse

### Grad der Hydrophobie

Der Grad der Hydrophobie wird durch Titration bestimmt. Dazu werden 0,2 g der Probe in einem 250 ml Scheidetrichter eingewogen und 50 ml Reinstwasser zugegeben. Die Kieselsäure bleibt an der Oberfläche. Es wird nun ml-weise Methanol aus einer Bürette zugegeben. Dabei wird der Scheidetrichter mit kreisförmiger Handbewegung geschüttelt, so daß in der Flüssigkeit keine Wirbel entstehen. Auf diese Weise wird solange Methanol zugegeben, bis das Pulver benetzt wird. Dies ist an dem Absinken des gesamten Pulvers von der Wasseroberfläche zu erkennen. Der Verbrauch an Methanol wird in Gew.-% Methanol umgerechnet und als Wert für die Methanolbenetzbarkeit angegeben.

Die so ermittelte Methanolbenetzbarkeit der mit Organosilanen umgesetzten Fällungskieselsäure ist in den Tabellen 1 und 2 angegeben.

**Tabelle 1**

| Methanolbenetzbarkeit von mit WS 405 hydrophobierter Kieselsäure | | |
|---|---|---|
| **mol SiOH : mol Silan** | **1 : 1** | **1 : 2** |
| Art der Zuführung | StaticMix | StaticMix |
| Methanolbenetzbarkeit [%] | - | 20 |

**Tabelle 2**

| Methanolbenetzbarkeit von mit WS 431 hydrophobierter Kieselsäure | | | |
|---|---|---|---|
| **mol SiOH : mol Silan** | **1 : 0,5** | **1 : 0,5** | **1 : 1** |
| Art der Zuführung | StaticMix | Batch | StaticMix |
| Methanolbenetzbarkeit [%] | 59 | 56 | 67 |

Durch die Umsetzung von Organosilanen können Methanolbenetzbarkeiten von 60 - 70 % erreicht werden. Der Grad der Hydrophobie steigt sowohl bei den Umsetzungen mit dem Organosilan Si 208 als auch bei denen mit Si 216 mit steigendem Silangehalt in der Sprühtrocknerspeise an.

Im Vergleich zu der mit Si 208 hydrophobierten Kieselsäure führen die mit Si 216 durchgeführten Umsetzungen bei gleicher Stöchiometrie zu hydrophoberen Produkten. Der höchste Wert wird für das Umsetzungsverhältnis SiOH : Silan von 1 : 1 mit 65 % erreicht.

### C-Gehalt

Der C-Gehalt ist proportional zur Zahl der direkt an der Kieselsäureoberfläche chemisch gebundenen oder indirekt über Silanpolykondensation gebundenen Silanmoleküle.

**Tabelle 3**

| Kohlenstoffgehalt von mit WS 405 hydrophobierter Kieselsäure | | |
|---|---|---|
| **mol SiOH : mol Silan** | **1 : 1** | **1 : 2** |
| Art der Zuführung | StaticMix | StaticMix |
| Methanolbenetzbarkeit [%] | 4,4 | 5,9 |

**Tabelle 4**

| Kohlenstoffgehalt von mit WS 431 hydrophobierter Kieselsäure | | | |
|---|---|---|---|
| **mol SiOH : mol Silan** | **1 : 0,5** | **1 : 0,5** | **1 : 1** |
| Art der Zuführung | StaticMix | Batch | StaticMix |
| Methanolbenetzbarkeit [%] | 10,8 | 10,2 | 17,5 |

Mit steigendem Silangehalt in der Sprühtrocknerspeise nimmt der C-Gehalt erwartungsgemäß zu.

**Tabelle 5**

| Analysendaten für im Sprühtrockner hergestellte, mit WS 405 umgesetzte Kieselsäure | | | |
|---|---|---|---|
| **Umsetzungsverhältnis** | **[mol OH:mol Silan]** | **1:1** | **1:2** |
| Art der Zuführung | | StaticMix | Static Mix |
| Trocknungsverlust | [%] | 3,9 | 3,5 |
| Glühverlust | [%] | 8,9 | 11,2 |
| DBP | [g/100 g] | 230 | 218 |
| Mittlere Teilchengröße | [µm] | 33,2 | 30,3 |
| BET-Oberfläche | [m²/g] | 143 | 128 |
| Sears-Zahl | [ml] | 16,9 | 14,4 |
| C-Gehalt | [%] | 4,4 | 5,9 |
| Methanolbenetzbarkeit | [%] | - | 20 |

**Tabelle 6**

| Analysendaten für im Sprühtrockner hergestellte, mit WS 431 umgesetzte Kieselsäure | | | | |
|---|---|---|---|---|
| **Umsetzungsverhältnis** | **[mol OH:mol Silan]** | **1 : 0,5** | **1 : 0,5** | **1 : 1** |
| Art der Zuführung | | StaticMix | Batch | StaticMix |
| Trocknungsverlust | [%] | 4,5 | 3,1 | 4,3 |
| Glühverlust | [%] | 16 | 15,9 | 25,5 |
| DBP | [g/100g] | 181 | 218 | 155 |
| Mittlere Teilchengröße | [µm] | 36,4 | 37,1 | 35,7 |
| BET-Oberfläche | [m²/g] | 102 | 99 | 73 |
| Sears-Zahl | [ml] | 11,8 | 14,2 | 9,7 |
| C-Gehalt | [%] | 10,8 | 10,2 | 17,5 |
| Methanolbenetzbarkeit | [%] | 59 | 56 | 67 |

### Meßmethoden zur Bestimmung der physikalisch-chemischen Kenndaten

### Trocknungsverlust

Nach DIN ISO 787/2, ASTM D 280 JIS K 5101/21

### Glühverlust

Nach DIN ISO 3262/11, ASTM D 1208, JIS K 5101/23, bezogen auf 2 h bei 105 °C getrocknete Substanz

### Kohlenstoffgehalt

Quantitative Bestimmung mit dem Elementanalysator LECO-CS 244.

## Patentansprüche

1. Hydrophobe Fällungskieselsäure, gekennzeichnet durch die physikalisch-chemischen Kenndaten:
| | | | |
|---|---|---|---|
| Trocknungsverlust | [%] | 2,0 - 10 | DIN ISO 787/2 |
| Glühverlust | [%] | 2 - 25 | DIN ISO 3262/11 |
| Methanolbenetzbarkeit | [%] | 20 - 80 | titriert |
| Kohlenstoffgehalt | [%] | 1 - 30 | - |

2. Verfahren zur Herstellung der hydrophoben Fällungskieselsäure gemäß Anspruch 1, dadurch gekennzeichnet, daß man eine wäßrige Fällungskieselsäuresuspension herstellt und diese mit einer wäßrigen Silanemulsion vermischt und diese Mischung trocknet.

3. Verfahren nach Anspruch 2, dadurch gekennzeichnet, daß man die Mischung mittels Sprühtrocknung trocknet.

4. Verfahren nach Anspruch 2, dadurch gekennzeichnet, daß man die Mischung batchweise herstellt.

5. Verfahren nach Anspruch 2, dadurch gekennzeichnet, daß man die Fällungskieselsäuresuspension und die Silanemulsion nach dem Durchlaufen einer Mischstrecke gleichzeitig in den Sprühtrockner eindosiert.

6. Verwendung der Fällungskieselsäure gemäß Anspruch 1 zur Herstellung von Entschäumern.

7. Verwendung der Fällungskieselsäure gemäß Anspruch 1 bei der Herstellung von Papier.
